# EUROPEAN PATENT SPECIFICATION

(11) **EP 2 416 611 B1**
(45) Date of publication and mention of the grant of the patent: **03.10.2012**
(21) Application number: 10290434.9
(22) Date of filing: 02.08.2010
(51) Int. Cl.: H04W 52/34

(54) **Bandwidth adjustment in wireless telecommunication**
Bandbreitenanpassung bei drahtloser Telekommunikation
Réglage de la bande passante dans les télécommunications sans fil

(43) Date of publication of application: 08.02.2012
(73) Proprietor: Alcatel Lucent, 75007 Paris (FR)
(72) Inventor: Ambrosy, Anton, 75233 Tiefenbronn (DE); Zeller, Dietrich Karl, 71067 Sindelfingen (DE); Klein, Siegfried, 70469 Stuttgart (DE)
(74) Representative: Wetzel, Emmanuelle

(56) References cited:
- EP-A1- 1 892 847
- WO-A2-2009/058091
- US-A1- 2007 184 869

## Description

### Field of the invention

The invention relates to the field of wireless telecommunication, more specifically to bandwidth adjustment in wireless telecommunication.

### Background and related art

Adjusting the telecommunication bandwidth is discussed in 3GPP standards, see 3GPP TS 36.104.

US 2007/184869 A1 describes a controller for relay stations for use in a wireless network. The relay station increases cell coverage and user data rates while employing power consumption saving techniques. The relay station compares a threshold power setting with a current power setting. If the threshold power setting is greater than the current power setting, the relay station increments the threshold power setting and decreases the cell coverage. If the threshold power setting is less than or equal to the current power setting, the relay station decreases the threshold power setting until the threshold power setting is equal to a total power setting of the relay station. The relay station also employs load balancing techniques by comparing a threshold power setting with a current load setting. If the threshold power setting is greater than the current load setting, the relay station increases the cell coverage based on the available bandwidth.

### Summary

It is an object of the present invention to provide an improved method of reconfiguring a base station of a wireless telecommunication network, an improved base station apparatus for a wireless telecommunication network, and an improved computer-readable storage medium.

These objects are achieved by the method, the base station apparatus, and the computer-readable storage medium according to the independent claims. Embodiments of the invention are given in the dependent claims.

The invention provides a method of reconfiguring a base station of a wireless telecommunication network. A number of pilot symbols are generated in the base station. The number of generated pilot symbols per time corresponds to a telecommunication bandwidth. The telecommunication bandwidth is the bandwidth used for wireless telecommunication by the base station. The more bandwidth is used for wireless telecommunication by the base station, the more data may be transmitted and/or received by the base station from/to mobile devices in the wireless telecommunication network.

Pilot symbols are the first broadcast symbols that are searched and acquired by mobile devices in the vicinity of the base station. The pilot symbols are used as a power, timing, and phase reference for the mobile devices.

The number of pilots corresponds to the telecommunication bandwidth because the more bandwidth is used the more pilots have to be transmitted for allowing to perform measurements on the different frequencies within the band. If, for example, one pilot is transmitted per 60kHz bandwidth, increasing the bandwidth by 60kHz would result in transmitting one more pilot symbol.

The number of pilot symbols is transmitted with a total transmission power provided by a power amplifier. The total transmission power is a sum of transmission powers of each of the number of transmitted pilot symbols. In other words, the total transmission power is split between the pilot symbols. It is to be noted that the total transmission power means the total transmission power of the pilot symbols. The term total transmission power used herein is to be understood as the total transmission power of the pilot symbols.

The telecommunication bandwidth is adjusted to a cell load. The cell load is the wireless telecommunication traffic in the cell served by the base station. The cell is a part of the wireless telecommunication network served by the base station. Mobile devices such as PDAs, laptops, or mobile phones, which are located in the geographical coverage area of the cell, are served by the base station. The higher the cell load is the more telecommunication bandwidth is needed by the base station. Thus, the telecommunication bandwidth is increased when the cell load is increased and the telecommunication bandwidth is decreased when the cell load is decreased.

After the adjustment of the telecommunication bandwidth the number of pilot symbols is adjusted to the telecommunication bandwidth. This means, the number of pilot symbols is decreased when the telecommunication bandwidth is decreased and the number of pilot symbols is increased when the telecommunication bandwidth is increased. This step is necessary, because the number of transmitted pilot symbols has to correspond to the telecommunication bandwidth.

The total transmission power is adjusted such that each transmission power of each of the number of pilot symbols is constant. Preferably, the total transmission power is decreased when the number of pilot symbols is decreased and the total transmission power is increased when the number of pilot symbols is increased. Thus, the total transmission power is indirectly adjusted to the cell load by adjusting the total transmission power to the number of pilot symbols, which are adjusted to the cell load.

The total transmission power is adjusted to keep the transmission power of each of the number of pilot symbols constant. This is advantageous because the transmission power of each pilot symbol is kept constant. Thus, the cell coverage area of the cell being served by the base station is also kept constant as the transmission power of each of the number of pilot symbols is kept constant.

According to embodiments of the invention the method comprises increasing a supply voltage of the power amplifier when the total transmission power is increased, and decreasing the supply voltage of the power amplifier when the total transmission is decreased. By increasing and decreasing the supply voltage of the power amplifier an operating point of the power amplifier can be chosen. Preferably, the operating point of the power amplifier is chosen such that the power amplifier operates near to its maximum output power. Near the maximum output power the power amplifier operates most efficiently. Thus, by increasing and decreasing the supply voltage of the power amplifier the power amplifier is used more efficiently and power is saved.

Additionally or alternatively adjusting the total transmission power may be performed by adjusting the bias of the power amplifier.

According to embodiments of the invention the supply voltage defines a maximum total transmission power. The supply voltage and the total transmission power define an operating point of the power amplifier. The supply voltage and the maximum total transmission power define a maximum operating point. The supply voltage is increased or decreased such that the operating point is below or equal to the maximum operating point.

In other words, the power amplifier has a maximum total transmission power that corresponds to a certain supply voltage. The maximum total transmission power is the highest possible transmission power for this supply voltage. The maximum total transmission power corresponds to the maximum output power of the power amplifier. The supply voltage and the transmission power define an operating point of the power amplifier. Here, the transmission power is the actually used transmission power. The power amplifier operates at a maximum operating point when amplifying the pilot symbols with the maximum total transmission power. By increasing or decreasing the supply voltage the operating point used for amplifying the pilot symbols is adjusted such that it is below or equal to the maximum operating point. Thus, the power amplifier is always operated near its maximum operating point.

According to embodiments of the invention the operating point is 0-60%, preferably 0-30%, even more preferably 0-20% below the maximum operating point.

According to embodiments of the invention a central network unit triggers adjusting the telecommunication bandwidth. The bandwidth adjustment may for example be determined based on traffic observation. The central network unit could trigger adjusting the telecommunication bandwidth by transmitting a signal to the base station. The traffic could be observed in the base station and/or in the central network unit. For example, when the observed traffic is increased, the telecommunication bandwidth of the base station is also increased. Then, the number of pilot symbols and the total transmission power are also increased.

According to embodiments of the invention a unit within the base station triggers adjusting the telecommunication bandwidth. The unit within the base station may for example be a processor in the base station.

According to embodiments of the invention a self-optimization algorithm of the telecommunication network triggers adjusting the telecommunication bandwidth. The self-optimization algorithm may for example be performed in the base station, other base stations of the wireless telecommunication network, and/or at least one central unit of the wireless telecommunication network. Such a self-optimization algorithm for adjusting the telecommunication bandwidth considers the cell load of a plurality of cells of the wireless telecommunication network. When optimizing communication in the wireless telecommunication network, adjusting the telecommunication bandwidth in the cell of the base station may be advantageous then, the self-optimization algorithm triggers adjusting the telecommunication bandwidth in the cell served by the base station.

According to embodiments of the invention a self-optimization algorithm of the base station triggers adjusting the telecommunication bandwidth. In this case, the self-optimization algorithm runs only on the base station. The self-optimization algorithm optimizes communication in the cell served by the base station.

According to embodiments of the invention the base station transmits a signal to at least one neighboring base station. The signal is indicative of adjusting the telecommunication bandwidth. A neighboring base station is a base station, which serves a cell that neighbors at least partly the cell of the base station. Neighboring means here that at least parts of the cell have a common border. This is advantageous because the neighboring cells may also adjust their telecommunication bandwidth after the adjustment in the cell. Furthermore a neighboring cell may need information about the base station bandwidth for the configuration of the Allowed-MeasBandwidth value, which is specified in 3GPP TS 36.331 and used to instruct mobile devices about the used bandwidth of this base station.

According to embodiments of the invention a time schedule triggers adjusting the telecommunication bandwidth. The time schedule may for example trigger increasing the bandwidth for times when high traffic is expected and decrease the telecommunication bandwidth for times when low traffic is expected. Traffic estimations may be performed by the base station or by a central network unit. For example, the traffic in the cell is observed for a certain amount of time, for example several weeks or months. Then, based on these observations, the timetable is generated.

For example the following timetable may be generated for a cell of the base station.

| Hour | Working day | Weekend |
|---|---|---|
| 0h - 5h | 3 MHz and 40 dBm | 1.4 MHz and 37 dBm |
| 5h - 8h | 5 MHz and 43 dBm | 3 MHz and 40 dBm |
| 8h - 12h | 10 MHz and 46 dBm | 5 MHz and 43 dBm |
| 12h - 18h | 20 MHz and 49 dBm | 10 MHz and 46 dBm |
| 18h - 24h | 10 MHz and 46 dBm | 10 MHz and 46 dBm |

The table shows that during a working day the highest bandwidth is used from noon to 6 pm. The lowest bandwidth is used from midnight to 5 am. The bandwidth is increased from 3 MHz over 5 MHz between 5 am and 8 am and 10 MHz between 8 am and noon to 20 MHz and then decreased again to 10 MHz for the time period between 6 pm and midnight. The total transmission power is accordingly increased and decreased. It increases from 40 dBm over 43 dBm and 46 dBm to 49 dBm and is then decreased from 49 dBm to 46 dBm in the corresponding time slots.

For a weekend day the bandwidth is increased from 1.4 MHz over 3 and 5 MHz to 10 MHz. The highest bandwidth is used from noon to midnight. The total transmission power is accordingly increased such that the transmission power for each of the number of pilots is kept constant.

In another aspect the invention relates to a base station apparatus for a wireless telecommunication network. The base station apparatus comprises means for generating a number of pilot symbols in the base station. The number of generated pilots per time corresponds to a telecommunication bandwidth. The pilot symbols may for example be generated by a processor of the base station apparatus.

Means for transmitting the number of pilot symbols with a total transmission power provided by a power amplifier are also comprised by the base station apparatus. The means for transmitting may for example be an antenna. The total transmission power is a sum of transmission powers of each of the number of transmitted pilot symbols.

The processor is adapted for adjusting the telecommunication bandwidth to a cell load. Thus, the processor may also be referred to as means for adjusting the telecommunication bandwidth. Further, the processor is adapted for adjusting the number of pilot symbols to the telecommunication bandwidth and the processor is further adapted for adjusting the total transmission power such that each transmission power of each of the number of pilot symbols is constant.

In yet another aspect the invention relates to a computer-readable storage medium. The computer-readable storage medium may for example be a digital storage medium such as a DVD, CD, hard disc, and/or memory card. The storage medium comprises instructions that when executed by a base station apparatus according to embodiments of the invention cause the base station apparatus to perform a method according to embodiments of the invention. The method comprises generating a number of pilot symbols in the base station. The number of generated pilot symbols per time corresponds to a telecommunication bandwidth. The number of pilot symbols is then transmitted with a total transmission power provided by a power amplifier. The total transmission power is a sum of transmission powers of each of the number of transmitted pilot symbols. Further, the instructions cause the base station apparatus to adjust the telecommunication bandwidth to a cell load and to adjust the number of pilot symbols to the telecommunication bandwidth. Further the base station apparatus is caused to adjust the total transmission power such that each transmission power of each of the number of pilot symbols is constant.

### Brief description of the drawings

In the following preferred embodiments of the invention will be described, by way of example only, and with reference to the drawings in which:
- Fig. 1: is a block diagram of a base station apparatus according to embodiments of the invention; and
- Fig. 2: is a flow diagram of a method according to embodiments of the invention.

### Detailed description

Like numbered elements in these Figs. are either identical elements or perform the same function. Elements which have been discussed previously will not necessarily be discussed in later Figs. if the function is identical.

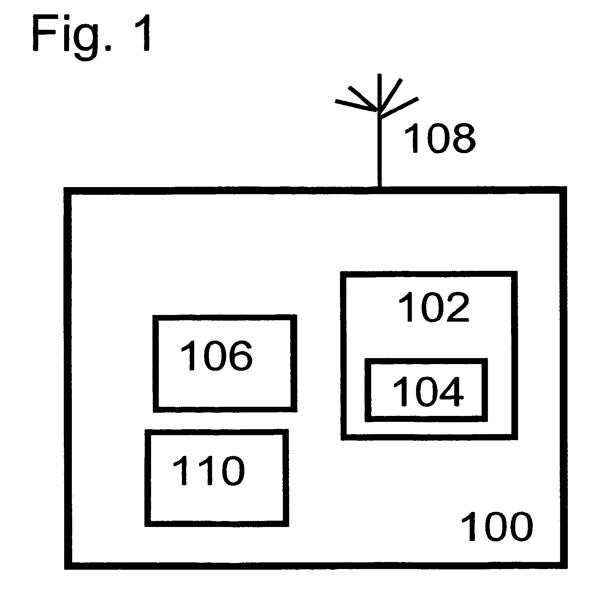

Fig. 1 is a block diagram of a base station apparatus 100. The base station 100 comprises a data storage 102 with instructions 104 stored in the data storage 102. Further, the base station 100 comprises a processor 106 and an antenna 108.

In operating, the processor 106 executes the instructions 104 stored in data storage 102. The instructions 104 cause the processor 106 to generate a number of pilot symbols. The number of generated pilot symbols per time corresponds to a telecommunication bandwidth. The processor is further adapted for transmitting the number of pilot symbols with a total transmission power provided by a power amplifier 110. The total transmission power is a sum of transmission powers of each of the number of transmitted pilot symbols. The processor adjusts the telecommunication bandwidth to a cell load. The cell load is an indicator for the telecommunication traffic in the cell served by the base station. The processor 106 adjusts the number of pilot symbols to the telecommunication bandwidth and the processor 106 controls the power amplifier such that the total transmission power is adjusted to keep the transmission power of each of the number of pilot symbols constant.

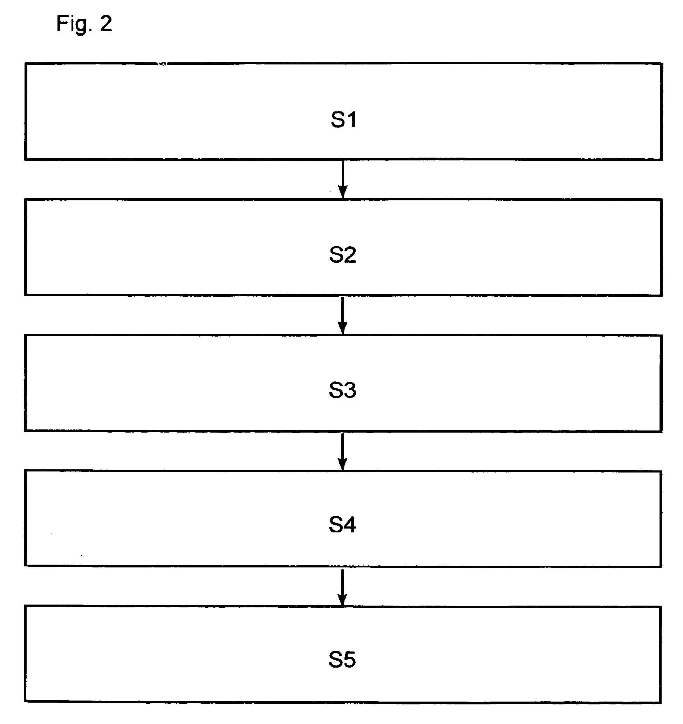

Fig. 2 is a flow diagram of a method according to embodiments of the invention.

In step S1 a number of pilot symbols is generated in the base station. The number of generated pilot symbols per time corresponds to a telecommunication bandwidth. In step S2 the number of pilot symbols is transmitted with a total transmission power provided by a power amplifier. The total transmission power is a sum of transmission powers of each of the number of transmission pilot symbols.

In step S3 the processor of the base station adjusts the telecommunication bandwidth to the cell load and in step S4 the number of pilot symbols is adjusted to the telecommunication bandwidth. Step S5 comprises adjusting the total transmission power such that each transmission power each of the number of pilot symbols is constant.

### List of Reference Numerals

| | |
|---|---|
| 100 | Base station |
| 102 | Data storage |
| 104 | Instructions |
| 106 | Processor |
| 108 | Antenna |
| 110 | Power amplifier |

## Claims

1. A method of reconfiguring a base station (100) of a wireless telecommunication network, wherein the method comprises the following steps:
- generating (S1) a number of pilot symbols in the base station, the number of generated pilot symbols per time corresponding to a telecommunication bandwidth;
- transmitting (S2) the number of pilot symbols with a total transmission power provided by a power amplifier (110), the total transmission power being a sum of transmission powers of each of the number of transmitted pilot symbols;
- adjusting (S3) the telecommunication bandwidth to a cell load;
- adjusting (S4) the number of pilot symbols to the telecommunication bandwidth; and
- adjusting (S5) the total transmission power such that each transmission power of each of the number of pilot symbols is constant.

2. Method according to claim 1, wherein the method comprises further the following step:
- increasing a supply voltage of the power amplifier when the total transmission power is increased, and decreasing the supply voltage of the power amplifier when the total transmission power is decreased.

3. Method according to claim 2, wherein the supply voltage defines a maximum total transmission power, wherein the supply voltage and the total transmission power define an operating point of the power amplifier, wherein the supply voltage and the maximum total transmission power define a maximum operating point, and wherein the supply voltage is increased or decreased such that the operating point is below or equal to the maximum operating point.

4. Method according to claim 3, wherein the operating point is 0-60% below the maximum operating point.

5. Method according to any one of the preceding claims, wherein a central network unit triggers adjusting the telecommunication bandwidth.

6. Method according to any one of the claims 1-4, wherein a unit within the base station triggers adjusting the telecommunication bandwidth.

7. Method according to any one of the claims 1-4, wherein a self optimization algorithm of the telecommunication network triggers adjusting the telecommunication bandwidth.

8. Method according to any one of the claims 1-4, wherein a self-optimization algorithm of the base station triggers adjusting the telecommunication bandwidth.

9. Method according to claim 7, wherein the base station transmits a signal to at least one neighbouring base station, the signal being indicative of adjusting the telecommunication bandwidth.

10. Method according to any one of the claims 1-4, wherein a time schedule triggers adjusting the telecommunication bandwidth.

11. Base station apparatus (100) for a wireless telecommunication network, the base station apparatus comprising:
- means (106) for generating a number of pilot symbols, the number of generated pilot symbols per time corresponding to a telecommunication bandwidth;
- means (108) for transmitting the number of pilot symbols with a total transmission power provided by a power amplifier (110), the total transmission power being a sum of transmission powers of each of the number of transmitted pilot symbols:
- means (106) for adjusting the telecommunication bandwidth to a cell load;
- means (106) for adjusting the number of pilot symbols to the telecommunication bandwidth; and
- means (106) for adjusting the total transmission power such that each transmission power of each of the number of pilot symbols is constant.

12. Acomputer-readable storage medium (102), the computer-readable storage medium comprising instructions that when executed by a base station apparatus (100) according to claim 11 cause the base station apparatus to perform a method of reconfiguring a base station, the method comprising:
- generating a number of pilot symbols in the base station, the number of generated pilot symbols per time corresponding to a telecommunication bandwidth;
- transmitting the number of pilot symbols with a total transmission power provided by a power amplifier, the total transmission power being a sum of transmission powers of each of the number of transmitted pilot symbols;
- adjusting the telecommunication bandwidth to a cell load;
- adjusting the number of pilot symbols to the telecommunication bandwidth; and
- adjusting the total transmission power such that each transmission power of each of the number of pilot symbols is constant.

## Patentansprüche

1. Verfahren zur Rekonfiguration einer Basisstation (100) eines drahtlosen Telekommunikationsnetzwerks, wobei das Verfahren die folgenden Schritte umfasst:
- Erzeugen (81) einer Anzahl von Pilotsymbolen in der Basisstation, wobei die Anzahl der erzeugten Pilotsymbole pro Zeit einer Telekommunikationsbandbreite entspricht;
- Übertragen (S2) der Anzahl von Pilotsymbolen mit einer von einem Leistungsverstärker (110) bereitgestellten Gesamtsendeleistung, wobei die Gesamtsendeleistung eine Summe der Sendeleistungen eines jeden der Anzahl von übertragenen Pilotsymbolen ist;
- Anpassen (S3) der Telekommunikationsbandbreite an eine Zelllast;
- Anpassen (S4) der Anzahl von Pilotsymbolen an die Telekommunikationsbandbreite; und
- Anpassen (S5) der Gesamtsendeleistung, so dass jede Sendeleistung eines jeden der Anzahl von Pilotsymbolen konstant ist.

2. Verfahren nach Anspruch 1, wobei das Verfahren weiterhin den folgenden Schritt umfasst:
- Erhöhen einer Versorgungsspannung des Leistungsverstärkers, wenn die Gesamtsendeleistung erhöht wird, und Reduzieren der Versorgungsspannung des Leistungsverstärkers, wenn die Gesamtsendeleistung reduziert wird.

3. Verfahren nach Anspruch 2, wobei die Versorgungsspannung eine maximale Gesamtsendeleistung definiert, wobei die Versorgungsspannung und die Gesamtsendeleistung einen Arbeitspunkt des Leistungsverstärkers definieren, wobei die Versorgungsspannung und die maximale Gesamtsendeleistung einen maximalen Arbeitspunkt definieren, und wobei die Versorgungsspannung derart erhöht oder reduziert wird, dass der Arbeitspunkt niedriger als der maximale oder gleich dem maximalen Arbeitspunkt ist.

4. Verfahren nach Anspruch 3, wobei der Arbeitspunkt 0-60% unter dem maximalen Arbeitspunkt liegt.

5. Verfahren nach einem beliebigen der vorstehenden Ansprüche, wobei die Anpassung der Telekommunikationsbandbreite durch eine zentrale Netzwerkeinheit ausgelöst wird.

6. Verfahren nach einem beliebigen der Ansprüche 1-4, wobei die Anpassung der Telekommunikationsbandbreite durch eine Einheit innerhalb der Basisstation ausgelöst wird.

7. Verfahren nach einem beliebigen der Ansprüche 1-4, wobei die Anpassung der Telekommunikationsbandbreite durch einen Selbstoptimierungsalgorithmus des Telekommunikationsnetzwerks ausgelöst wird.

8. Verfahren nach einem beliebigen der Ansprüche 1-4, wobei die Anpassung der Telekommunikationsbandbreite durch einen Selbstoptimierungsalgorithmus der Basisstation ausgelöst wird.

9. Verfahren nach Anspruch 7, wobei die Basisstation an mindestens eine benachbarte Basisstation ein Signal überträgt, wobei das Signal für die Anpassung der Telekommunikationsbandbreite indikativ ist.

10. Verfahren nach einem beliebigen der Ansprüche 1-4, wobei die Anpassung der Telekommunikationsbandbreite gemäß einem Zeitplan ausgelöst wird.

11. Basisstationsvorrichtung (100) für ein drahtloses Telekommunikationsnetzwerk, wobei die Basisstationsvorrichtung umfasst:
- Mittel (106) zum Erzeugen einer Anzahl von Pilotsymbolen, wobei die Anzahl der erzeugten Pilotsymbole pro Zeit einer Telekommunikationsbandbreite entspricht;
- Mittel (108) zum Übertragen der Anzahl von Pilotsymbolen mit einer von einem Leistungsverstärker (110) bereitgestellten Gesamtsendeleistung, wobei die Gesamtsendeleistung eine Summe der Sendeleistungen eines jeden der Anzahl von übertragenen Pilotsymbolen ist;
- Mittel (106) zum Anpassen der Telekommunikationsbandbreite an eine Zelllast;
- Mittel (106) zum Anpassen der Anzahl von Pilotsymbolen an die Telekommunikationsbandbreite; und
- Mittel (106) zum Anpassen der Gesamtsendeleistung, so dass jede Sendeleistung eines jeden der Anzahl von Pilotsymbolen konstant ist.

12. Computerlesbares Speichermedium (102), wobei das computerlesbare Speichermedium Befehle enthält, welche, wenn sie von einer Basisstationsvorrichtung (100) gemäß Anspruch 11 ausgeführt werden, bewirken, dass die Basisstationsvorrichtung ein Verfahren zur Rekonfiguration einer Basisstation durchführt, wobei das Verfahren umfasst:
- Erzeugen einer Anzahl von Pilotsymbolen in der Basisstation, wobei die Anzahl der erzeugten Pilotsymbole pro Zeit einer Telekommunikationsbandbreite entspricht;
- Übertragen der Anzahl von Pilotsymbolen mit einer von einem Leistungsverstärker (110) bereitgestellten Gesamtsendeleistung, wobei die Gesamtsendeleistung eine Summe der Sendeleistungen eines jeden der Anzahl von übertragenen Pilotsymbolen ist;
- Anpassen der Telekommunikationsbandbreite an eine Zelllast;
- Anpassen der Anzahl von Pilotsymbolen an die Telekommunikationsbandbreite; und
- Anpassen der Gesamtsendeleistung, so dass jede Sendeleistung eines jeden der Anzahl von Pilotsymbolen konstant ist.

## Revendications

1. Procédé de reconfiguration d'une station de base (100) d'un réseau de télécommunication sans fil, le procédé comprenant les étapes suivantes :
- générer (S1) un nombre de symboles pilotes dans la station de base, le nombre de symboles pilotes générés en fonction du temps correspondant à une largeur de bande de télécommunication ;
- transmettre (S2) le nombre de symboles pilotes avec une puissance de transmission totale alimentée par un amplificateur de puissance (110), la puissance de transmission totale étant une somme de puissances de transmission de chaque symbole pilote parmi le nombre de symboles pilotes transmis ;
- ajuster (S3) la largeur de bande de télécommunication selon une charge de cellule ;
- ajuster (S4) le nombre de symboles pilotes selon la largeur de bande de télécommunication ; et
- ajuster (S5) la puissance de transmission totale de telle sorte que chaque puissance de transmission de chaque symbole pilote parmi le nombre de symboles pilotes soit constante.

2. Procédé selon la revendication 1, le procédé comprenant en outre l'étape suivante :
- augmenter une tension d'alimentation de l'amplificateur de puissance lorsque la puissance de transmission totale est augmentée, et diminuer la tension d'alimentation de l'amplificateur de puissance lorsque la puissance de transmission totale est diminuée.

3. Procédé selon la revendication 2, dans lequel la tension d'alimentation définit une puissance de transmission totale maximum, dans lequel la tension d'alimentation et la puissance de transmission totale définissent un point de fonctionnement de l'amplificateur de puissance, dans lequel la tension d'alimentation et la puissance de transmission totale maximum définissent un point de fonctionnement maximum, et dans lequel la tension d'alimentation est augmentée ou diminuée de telle sorte que le point de fonctionnement est inférieur ou égal au point de fonctionnement maximum.

4. Procédé selon la revendication 3, dans lequel le point de fonctionnement est 0 à 60 % en dessous du point de fonctionnement maximum.

5. Procédé selon l'une quelconque des revendications précédentes, dans lequel une unité de réseau centrale déclenche l'ajustement de la largeur de bande de télécommunication.

6. Procédé selon l'une quelconque des revendications 1 à 4, dans lequel une unité à l'intérieur de la station de base déclenche l'ajustement de la largeur de bande de télécommunication.

7. Procédé selon l'une quelconque des revendications 1 à 4, dans lequel un algorithme d'optimisation automatique du réseau de télécommunication déclenche l'ajustement de la largeur de bande de télécommunication.

8. Procédé selon l'une quelconque des revendications 1 à 4, dans lequel un algorithme d'optimisation automatique de la station de base déclenche l'ajustement de la largeur de bande de télécommunication.

9. Procédé selon la revendication 7, dans lequel la station de base transmet un signal à au moins une station de base voisine, le signal indiquant l'ajustement de la largeur de bande de télécommunication.

10. Procédé selon l'une quelconque des revendications 1 à 4, dans lequel une planification temporelle déclenche l'ajustement de la largeur de bande de télécommunication.

11. Appareil de station de base (100) pour un réseau de télécommunication sans fil, l'appareil de station de base comprenant :
- moyens (106) pour générer un nombre de symboles pilotes, le nombre de symboles pilotes générés en fonction du temps correspondant à une largeur de bande de télécommunication ;
- moyens (108) pour transmettre le nombre de symboles pilotes avec une puissance de transmission totale alimentée par un amplificateur de puissance (110), la puissance de transmission totale étant une somme de puissances de transmission de chaque symbole pilote parmi le nombre de symboles pilotes transmis ;
- moyens (106) pour ajuster la largeur de bande de télécommunication selon une charge de cellule ;
- moyens (106) pour ajuster le nombre de symboles pilotes selon la largeur de bande de télécommunication ; et
- moyens (106) pour ajuster la puissance de transmission totale de telle sorte que chaque puissance de transmission de chaque symbole pilote parmi le nombre de symboles pilotes soit constante.

12. Support de stockage lisible par ordinateur (102), le support de stockage lisible par ordinateur comprenant des instructions qui, lorsqu'elles sont exécutées par un appareil de station de base (100) selon la revendication 11, entraînent l'exécution d'un procédé de reconfiguration d'une station de base par l'appareil de station de base, le procédé comprenant les étapes suivantes : '
- générer un nombre de symboles pilotes dans la station de base, le nombre de symboles pilotes générés en fonction du temps correspondant à une largeur de bande de télécommunication ;
- transmettre le nombre de symboles pilotes avec une puissance de transmission totale alimentée par un amplificateur de puissance, la puissance de transmission totale étant une somme de puissances de transmission de chaque symbole pilote parmi le nombre de symboles pilotes transmis ;
- ajuster la largeur de bande de télécommunication selon une charge de cellule;
- ajuster le nombre de symboles pilotes selon la largeur de bande de télécommunication ; et
- ajuster la puissance de transmission totale de telle sorte que chaque puissance de transmission de chaque symbole pilote parmi le nombre de symboles pilotes soit constante.
